# EUROPÄISCHE PATENTSCHRIFT

(11) **EP 3 765 865 B1**
(45) Veröffentlichungstag und Bekanntmachung des Hinweises auf die Patenterteilung: **04.09.2024**
(21) Anmeldenummer: 19700497.1
(22) Anmeldetag: 12.01.2019
(51) Int. Cl.: G01S 13/931, G01S 13/87, G01S 7/03

(54) **RADARSENSORSYSTEM UND VERFAHREN ZUM BETREIBEN EINES RADARSENSORSYSTEMS**
RADAR SENSOR SYSTEM AND METHOD FOR OPERATING A RADAR SENSOR SYSTEM
SYSTÈME DE CAPTEURS RADAR ET PROCÉDÉ POUR FAIRE FONCTIONNER UN SYSTÈME DE CAPTEURS RADAR

(30) Priorität: 15.03.2018 DE 102018203934
(43) Veröffentlichungstag der Anmeldung: 20.01.2021
(73) Patentinhaber: Robert Bosch GmbH, 70442 Stuttgart (DE)
(72) Erfinder: MAYER, Marcel, 89173 Lonsee (DE); BAUR, Klaus, 88487 Mietingen (DE); SCHOOR, Michael, 70195 Stuttgart (DE)
(86) Internationale Anmeldenummer: PCT/EP2019/050718
(87) Internationale Veröffentlichungsnummer: WO 2019/174796

(56) Entgegenhaltungen:
- EP-A1- 2 881 752
- DE-A1- 102015 218 542

## Beschreibung

Die Erfindung betrifft ein Radarsensorsystem. Die Erfindung betrifft ferner ein Verfahren zum Betreiben eines Radarsensorsystems.

### Stand der Technik

Aktuell befindet sich der Markt der Fahrerassistenzsysteme im Umbruch.

Während in den letzten Jahren hauptsächlich preisgünstige Sensorik im Vordergrund stand, zeigt sich aktuell der Trend zum hochautonomen Fahren mit wesentlich höheren Ansprüchen an die Sensorik. Es werden bei Fahrzeugen mit einem hohem Grad an Fahrerassistenzfunktionen oder automatisierten Fahrfunktion zunehmend mehr Sensoren zum Steuern und Regeln der Funktionen verbaut.

Die in die Fahrzeuge eingebauten Sensoren können beispielsweise RadarSensoren oder LIDAR-Sensoren sein und müssen eine möglichst hohe Genauigkeit aufweisen. Durch ein Verwenden von präzisen Sensoren kann die Funktionssicherheit und die Zuverlässigkeit der autonomen oder teilautonomen Fahrfunktionen gewährleistet werden.

### Offenbarung der Erfindung

Es ist eine Aufgabe der vorliegenden Erfindung, ein Radarsensorsystem mit verbesserter Betriebscharakteristik, insbesondere erhöhter Radarauflösung bereitzustellen. Die Erfindung wird durch die unabhängigen Ansprüche definiert.

Gemäß einem ersten Aspekt wird die Aufgabe gelöst mit einem Radarsensorsystem, aufweisend:
- eine definierte Anzahl von HF-Bauelementen;
- wobei jedes der HF-Bauelemente jeweils wenigstens eine Antenne zum Senden und/oder Empfangen von Radarwellen und wenigstens eine Antennensteuerung zum Betreiben der wenigstens einen Antenne aufweist; und
- ein Synchronisationsnetzwerk, das mit allen HF-Bauelementen verbunden ist und über das eine Betriebsfrequenz aller HF-Bauelemente von wenigstens einem der HF Bauelemente synchronisierbar ist.

Auf diese Weise wird vorteilhaft eine hohe Kohärenz bzw. Synchronität zwischen allen HF Bauelementen bereitgestellt, wobei eines der HF-Bauelemente als Master fungiert, wobei alle HF-Bauelemente über ein Synchronisationsnetzwerk miteinander verbunden sind. Im Ergebnis ist dadurch eine verbesserte Betriebscharakteristik des Radarsensorsystems in Form einer hohen Entfernungs- und Winkelauflösung unterstützt. Vorteilhaft kann z.B. auch eine Notlauffunktionalität des Radarsensorsystems bereitgestellt werden.

Gemäß einem zweiten Aspekt wird die Aufgabe gelöst mit einem Verfahren zum Betreiben eines Radarsensorsystems, aufweisend die Schritte:
- Senden und/oder Empfangen von Radarwellen mittels einer definierten Anzahl von HF-Bauelementen mittels jeweils mindestens einer Antenne; und
- Synchronisieren einer Betriebsfrequenz der HF-Bauelemente mittels eines Synchronisationsnetzwerks, das mit der definierten Anzahl von HF-Bauelementen verbunden ist, wobei ein definiertes HF-Bauelement als Master der Synchronisation fungiert.

Das erfindungsgemäße Radarsensorsystem ist dadurch gekennzeichnet, dass das Synchronisationsnetzwerk kurze Leitungslängen in Relation zur Radarauflösung aufweist. Auf diese Weise wird ein nachteiliger Effekt von langen Leitungen in Form von Verlusten reduziert. Beispielsweise kann dadurch eine Laufzeit der Signale gering gehalten werden, die dadurch auch nur gering in die Entfernungsauflösung eingehen und damit vorteilhaft nur gering kompensiert werden müssen.

Das erfindungsgemäße Radarsensorsystem sieht vor, dass eine definierte Relation zwischen der Zuleitungslänge und der Binbreite hergestellt wird. Dadurch wird auf definierte Weise ein Kompensationsaufwand für Signale der HF-Bauelemente gering gehalten.

Das erfindungsgemäße Radarsensorsystem ist dadurch gekennzeichnet, dass die Länge der Zuleitungen derart ist, dass mit dem Radarsensorsystem eine Änderung der Bin-Breite um ein Zehntel bereitgestellt wird. Auf diese Weise wird ein gut praktikables Verhältnis zwischen Bin-Breite und Zuleitungslängen realisiert.

Eine Weiterbildung des Radarsensorsystems außerhalb des Schutzumfangs der Ansprüche zeichnet sich dadurch aus, dass die HF-Bauelemente derart zueinander angeordnet sind, dass definierte Gruppen der HF-Bauelementen definiert eng voneinander beabstandet sind, wobei die definierten Gruppen der HF-Bauelemente mittels einer Synchronisationsleitung verbunden sind. Vorteilhaft wird dadurch erreicht, dass die eng voneinander beanstandeten HF-Bauelemente keine Kompensation erfordern. Dabei liegt zwischen den derart gebildeten Gruppen eine definierte Leitungslänge des Synchronisationsnetzwerks vor, wobei dann im Falle von insgesamt vier HF-Bauelementen nur ein erstes Paar von HF-Bauelementen zu einem zweiten Paar von HF-Bauelementen kompensiert werden muss.

Vorteilhafte Weiterbildungen des Radarsensorsystems sind Gegenstand von abhängigen Ansprüchen. Eine vorteilhafte Weiterbildung des Radarsensorsystems zeichnet sich dadurch aus, dass die HF-Bauelemente derart zueinander angeordnet sind, dass definierte Gruppen der HF-Bauelementen definiert eng voneinander beabstandet sind, wobei ein weiteres HF-Bauelement eine von den Zuleitungen der Gruppe der HF-Bauelemente derart unterschiedlich lange Zuleitung des Synchronisationsnetzwerks aufweist, dass im Betrieb des Radarsensorsystems ein Mischzeitpunkt des weiteren HF-Bauelements zu einem Mischzeitpunkt der Gruppen der HF-Bauelemente versetzt ist. Auf diese Weise wird von einer Gruppe eine im Wesentlichen identische Laufzeit der Signale bereitgestellt, was eine Signalverarbeitung dadurch erleichtert, dass nur das als Master fungierende HF-Bauelement mit der unterschiedlichen Zuleitungslänge kompensiert werden muss.

Eine weitere vorteilhafte Weiterbildung des Radarsensorsystems ist dadurch gekennzeichnet, dass jedes HF-Bauelement als Master der Synchronisation fungieren kann. Auf diese Weise ist eine hohe Flexibilität in der Auswahl des Masters unterstützt.

Weitere vorteilhafte Weiterbildungen des Radarsensorsystems sind dadurch gekennzeichnet, dass die HF-Bauelemente in bestimmungsgemäßer Anbringlage um ca. 45 Grad zueinander verdreht angeordnet sind. Dadurch ist eine Leitungslänge minimiert und eine Zuführung von Signalen ist erleichtert.

Im Folgenden werden anhand von stark vereinfachten schematischen Darstellungen bevorzugte Ausführungsbeispiele des erfindungsgemäßen Radarsensorsystems näher erläutert. Dabei zeigen:
- Fig. 1: eine schematische Darstellung einer ersten Ausführungsform eines vorgeschlagenen Radarsensorsystems;
- Fig. 2: eine etwas detailliertere schematische Darstellung des vorgeschlagenen Radarsensorsystems von Fig. 1;
- Fig. 3: eine schematische Darstellung einer weiteren Ausführungsform des vorgeschlagenen Radarsensorsystems; und
- Fig. 4: ein prinzipielles Ablaufdiagramm eines vorgeschlagenen Verfahrens zum Betreiben eines Radarsensorsystems.

In den Figuren weisen dieselben konstruktiven Elemente jeweils dieselben Bezugsziffern auf.

Aktuelle Radarsensoren weisen üblicherweise viele HF-Kanäle zum Erzeugen und zum Empfangen von Radarwellen auf. Dabei können im Normalbetrieb alle HF-Bausteine gleichzeitig im Betrieb sein. Derartige Radarsensoren können bei einer symmetrischen Ausgestaltung in mehrere Teilsensoren unterteilt werden.

Jeder Teilsensor kann somit einen entsprechenden Anteil an HF-Bausteinen bzw. HF-Kanälen des Radarsensors aufweisen. Somit kann beispielsweise ein Teilsensor des Radarsensors in einem möglichen Notbetrieb eine autonome Fahrt eines Fahrzeugs bei einer eingeschränkten Geschwindigkeit ermöglichen. Dies kann auch dann realisiert werden, wenn Komponenten von anderen Teilsensoren nicht mehr funktionsfähig sind.

Der Aufbau des Radarsensorsystems kann beispielsweise aus bekannten kostengünstigen Basiskomponenten bestehen. Durch eine Parallelisierung mehrerer Bauelemente vom gleichen Typ lässt sich eine Verbesserung der Leistung und der Genauigkeit des Radarsensorsystems realisieren. Darüber hinaus kann durch die Verwendung mehrerer gleichartiger Bauelemente eine Redundanz zum Bereitstellen einer zuverlässigen Funktion der Anordnung ermöglicht sein. Hierdurch kann technisch einfach ein Notbetrieb des Radarsensorsystems umgesetzt werden. Dazu muss aber neben den HF-Komponenten und den Mikrocontrollern auch eine Redundanz bei der Takterzeugung vorhanden sein. Die HF-Komponenten können beispielsweise in Form von MMICs (engl. monolithic microwave integrated circuit) aufgebaute Antennensteuerungen oder Verstärker sein.

Dadurch, dass alle HF-Komponenten von einem gemeinsamen Taktgeber mit einer Nutz- bzw. Basisfrequenz gespeist werden, weist das Radarsensorsystem eine hohe Kohärenz auf. Insbesondere können die unterschiedlichen HF-Bauelemente mit identischer Betriebsfrequenz betrieben werden, wodurch eine redundante und kohärente Taktversorgung von mehreren HF-Bauelementen ermöglicht wird.

Vorzugsweise kann zumindest ein Teil der im Radarsensorsystem verwendeten HF-Bauelemente mit einem Takt bzw. einer Nutzfrequenz versorgt werden. Im Normalbetrieb können alle HF-Bauelemente bzw. Antennensteuerungen des Radarsensorsystems mit demselben Takt von mindestens einem Taktgeber versorgt und somit alle Daten miteinander verrechnet werden.

In einem Normalbetrieb des Radarsensorsystems erfolgt durch mindestens einen Taktgeber eine gleichzeitige Taktversorgung aller Antennensteuerungen bzw. HF-Bauelemente. Durch die Taktversorgung aus einer Quelle kann eine hohe Kohärenz realisiert werden. Alternativ oder zusätzlich kann die Taktversorgung aus mehreren parallel betriebenen Taktgebern aufgebaut sein. Weist ein Taktgeber beispielsweise einen Defekt auf, dann kann über die Steuereinheit mindestens ein weiterer Taktgeber zum Erzeugen einer Frequenz aktiviert bzw. zugeschaltet werden.

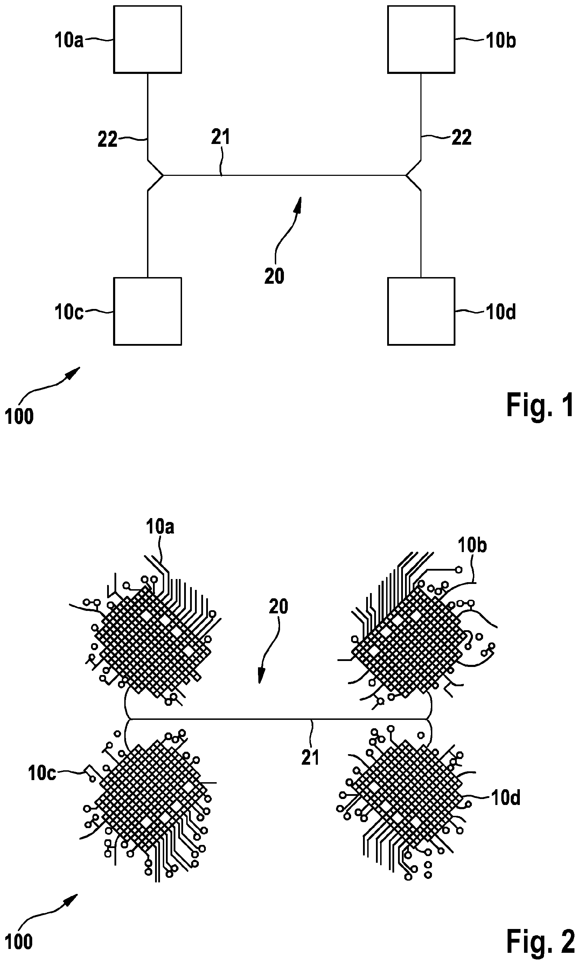

Fig. 1 zeigt eine schematische Darstellung einer ersten Ausführungsform eines vorgeschlagenen Radarsensorsystems 100. Das Radarsensorsystem 100 weist vier HF-Bauelemente 10a...10d auf, die als MMICs ausgebildet sind. Dabei ist die Anzahl vier lediglich beispielhaft, das vorgeschlagene Radarsensorsystem 100 kann auch weniger oder mehr als vier HF-Bauelemente aufweisen. Ferner erkennbar ist ein Synchronisationsnetzwerk 20, an das sämtliche HF-Bauelemente 10a...10d funktional angeschlossen sind (z.B. galvanisch leitend, galvanisch nichtleitend) und das zum Synchronisieren der Betriebsfrequenz bzw. LO-Frequenz aller HF-Bauelemente 10a...10d verwendet wird, wobei beim Synchronisiervorgang ein HF-Bauelement 10a...10d als Synchronisier-Masterbauelement und die anderen als Slave-HF-Bauelemente fungieren.

Ferner weist das Radarsensorsystem 100 Antennensteuerungen der HF-Bauelemente 10a...10d auf. Der Einfachheit halber sind weitere Komponenten der HF-Bauelemente 10a...10d, die zum Aussenden und zum Empfangen von Radarwellen erforderlich sind, wie beispielsweise Antennen, Verstärker, Oszillatoren, usw. in den Figuren nicht dargestellt.

Geometrische Längen von Leitungen des Synchronisationsnetzwerks 20 zwischen jeweils zwei HF Bauelementen sind in Relation zu einer Radarauflösung des Radarsensorsystems 100 vorteilhaft kurz, wodurch eine Laufzeit von Signalen innerhalb des Synchronisationsnetzwerks 20 an die Radarauflösung des Radarsensorsystems 100 angepasst ist.

Dadurch ergibt sich eine Gruppe von jeweils zwei HF- Bauelementen 10a-10c und 10b-10d, die jeweils gegeneinander nicht kompensiert werden müssen, da sie "gruppenintern" mit kurzen Leitungen verbunden sind. Im Ergebnis ergibt sich dadurch lediglich eine Notwendigkeit der Kompensation der nah beabstandeten Gruppen von HF-Bauelementen gegeneinander, was im Falle der Anordnung von Fig. 1 einer 50%-ige Kompensation aller beteiligten HF-Bauelemente (10a...10d) entspricht.

Vorteilhaft lässt sich das vorgeschlagene Konzept auch auf andere Zahlen von HF-Bauelementen 10a...10n anwenden. So könnten zum Beispiel insgesamt sechs HF-Bauelemente gemäß dem vorgeschlagenen Prinzip zu 2 x 3 oder 3 x 2 definiert eng voneinander beabstandeten HF-Bauelementen angeordnet werden (nicht in Figuren dargestellt).

Vorgeschlagen wird, dass das Synchronisier-HF-Masterbauelement während der Betriebszeit des Radarsensorsystems 100 als Quelle des Synchronisationssignals ("Master") fungiert, wobei sämtliche HF-Bauelemente über das Synchronisationsnetzwerk 20 miteinander funktional verbunden sind.

Üblicherweise wird in einem Radarsensorsystem einem HF-Bauelement die Rolle des Masters, der die Hochfrequenzerzeugung übernimmt, zugeordnet und die anderen HF-Bauelemente werden von diesem mit dem HF- Synchronisationssignal versorgt. Das HF-Synchronisationssignal ist erforderlich, um eine hohe Kohärenz der HF-Bauelemente 10a...10d bereit zu stellen, wodurch eine hohe Winkelauflösung des Radarsensorsystems 100 realisiert werden kann. Dafür werden an sich bereits bekannte, spezifische Bausteine für die Erzeugung der Hochfrequenz und für die weitere Signalverarbeitung eingesetzt.

Jedoch zeigt sich bei immer höheren Kosten für die HF-Bausteinentwicklung, beispielsweise bei höheren Maskenkosten für geringere Knotengrößen, dass die Verwendung von mehreren Baustellensteinen desselben Typs Kostenvorteile bringen kann, obwohl die eigentliche Siliziumfläche größer ist. Auf diese Weise ergibt sich mit der Erfindung die vorteilhafte Möglichkeit, ein kostengünstiges und redundantes Radarsensorsystem zu realisieren.

Mit der Erfindung wird vorgeschlagen, dass ein HF-Bauelement 10a...10d die genannte Aufgabe des Synchronisierens der restlichen HF-Bauelemente 10a...10d übernimmt, wobei der Synchronisations-Master über das Synchronisationsnetzwerk 20 mit sämtlichen HF-Bauelementen verbunden ist.

Fig. 2 zeigt die Anordnung des Radarsensorsystems 100 von Fig. 1 in einem höheren Detaillierungsgrad, wobei erkennbar ist, dass die HF-Bauelemente 10a...10d in bestimmungsgemäßer Anbringlage (z.B. auf einer Platine) gegeneinander in einem definierten Winkel, beispielsweise unter 45 Grad angeordnet sind, um auf diese Weise eine kürzere Länge von elektrischen Leitungen des Synchronisationsnetzwerks 20 zu ermöglichen, wodurch eine Detektionsgenauigkeit des Radarsensorsystems 100 optimiert werden kann.

Durch das derart verdrehte Anordnen der HF-Bauelemente 10a...10d wird vorteilhaft eine möglichst kurze Synchronisationsleitung 21 realisiert. Im Ergebnis sind dadurch kurze Laufzeiten der Signale auf der Synchronisationsleitung 21 ermöglicht, wobei für die HF-Bauelemente 10a...10d trotzdem noch genügend Platz für die Zuleitung der Signale der Sende- und Empfangskanäle vorhanden ist.

"Kurz" bedeutet in diesem Zusammenhang klein gegenüber einer Bin-Breite, die im Prinzip die Entfernungsauflösung des Radarsensorsystems 100 repräsentiert und die bei einem Hub von 1 GHz einem Wert von 15 cm entspricht. Wenn beispielsweise 1/10 Bin-Breite als akzeptabel angesehen wird, dann darf die elektrische Länge der Synchronisationsleitung 21 nicht größer als 3 cm sein. Der Faktor zwei stammt dabei aus den beiden Pfaden (Hin- und Rückweg) des Radars,

Für die Aufteilung der Leistung werden zusätzlich zur Synchronisationsleitung 21 T-Teiler 22 eingesetzt, weil diese gute Transmissionswerte von der Speiseleitung des T-Teilers 22 zu den Armen (und umgekehrt) des T-Teilers 22 haben. Unter der Speiseleitung ist dabei in der Darstellungsweise von Fig. 2 der mittlere, horizontale Abschnitt zu verstehen, wobei die Arme zur Speisleitung vertikal angeordnet sind.

Von der linken Seite mit den HF-Bauelementen 10a, 10c zur rechten Seite mit den HF-Bauelementen 10b, 10d erfährt das Signal über die Länge I der Leitung 21 eine Dämpfung, die beispielsweise mit 1 dB pro cm angenommen werden kann. Somit weist dieser Pfad keine unnötig hohe Dämpfung über die T-Teiler 22 auf.

Die Länge zwischen den Ports der HF-Bauelemente 10a, 10c bzw. mit den HF-Bauelementen 10b, 10d ist dagegen sehr kurz, sodass auf diesem Weg eine höhere Koppeldämpfung akzeptabel ist. Somit kann in Summe ein typischer T-Teiler 22 eingesetzt werden, weil damit das Verhältnis zwischen der Ausgangsleistung zur geforderten Eingangsleistung erreicht wird. Typische Dämpfungswerte sind dabei:
Arm zu Zuleitung: -3,5 dB
Arm zu Arm: -7dB

Unter einem Arm ist in diesem Zusammenhang eine Verbindung des T-Teilers 22 von Ausgang zu Ausgang zu verstehen.

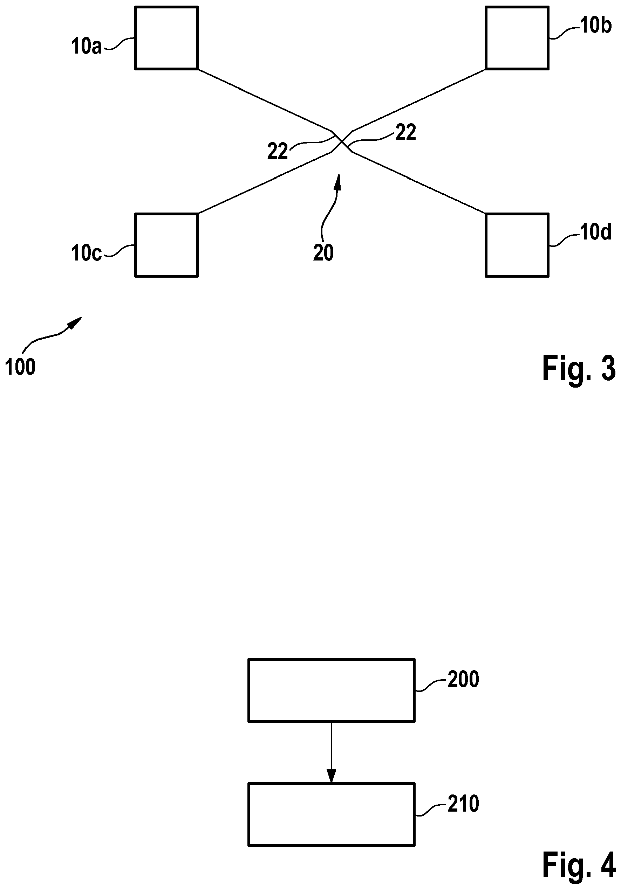

Neben der bevorzugten Ausführungsform der Figuren 1 und 2 kann mit der Erfindung eine weitere Ausführungsform des Radarsensorsystems 100, wie in Fig. 3 dargestellt, realisiert werden. In diesem Fall ergeben sich jedoch nicht die beiden Pärchen von HF-Bauelementen 10a, 10c und 10b, 10d mit identischen Mischzeitpunkten, sondern ein definiertes einzelnes HF-Bauelement (z.B. das HF-Bauelement 10a) hat einen Mischzeitpunkt, der im operativen Betrieb des Radarsensorsystems 100 versetzt zu jenem der anderen HF-Bauelemente (z.B. die HF-Bauelemente 10b...10d) des Radarsensorsystems 100 ist.

Dabei wird berücksichtigt, dass ein Mischer die gleiche LO-Frequenz zur Mischung zu einem anderen Zeitpunkt verwendet, weil die Welle eine gewisse Zeit benötigt, um die Strecke auf der Leitung zurückzulegen. Dieser Laufzeitunterschied äußert sich in einem Unterschied in der Entfernungsschätzung, da die Entfernungsschätzung im Wesentlichen eine Umrechnung der geschätzten Laufzeit der Radarwellen von Sender zu Ziel und zurück über eine Ausbreitungsgeschwindigkeit der Wellen in eine Entfernung realisiert.

Somit liegt ein "Schwerpunkt" der genannten Mischzeitpunkte näher an den HF-Bauelementen 10b...10d als am HF-Bauelement 10a, der vorzugsweise digital kompensiert wird. Dies wird dadurch erreicht, dass drei HF-Bauelemente (z.B. die HF-Bauelemente 10b...10d) im Wesentlichen die gleiche Länge von Zuleitungen des Synchronisationsnetzwerks 20 aufweisen, wobei ein viertes HF-Bauelement (z.B. das HF-Bauelement 10a) eine davon unterschiedliche Länge einer Zuleitung des Synchronisationsnetzwerks 20 aufweist.

Betrachtet man das Tor zwischen den HF-Bauelementen 10a, 10c gemäß Fig. 3, so ergibt sich unter Verwendung von zwei T-Teilern 22 eine annähernd optimale Leistungsaufteilung im Synchronisationsnetzwerk 20.

Beiden oben erläuterten Ansätzen der Figuren 1, 2 bzw. 3 gemeinsam ist die Möglichkeit, verschiedene HF-Bauelemente 10a...10d als Master zur Erzeugung der lokalen Oszillatorfrequenz einzusetzen und somit in einem Radarsensorsystem 100 mit einer Notlauffunktionalität verwendet zu werden.

Bei der vorteilhaften Ausführungsform gemäß den Figuren 1, 2 kann aufgrund der geringen Beabstandung voneinander sowohl das HF-Bauelement 10a als auch das HF-Bauelement 10c als Master verwendet werden, ohne dass weitere Anpassungen, beispielsweise in der digitalen Kompensation, vorgenommen werden müssen.

Der zweitgenannte Ansatz gemäß Fig. 3 ist zu bevorzugen, wenn die HF-Kanäle der HF-Bauelemente 10a, 10b gegenüber dem Pärchen der HF-Bauelemente 10c, 10d weit auseinanderliegen, damit eine große Apertur realisiert werden kann, ohne dass durch die HF-Zuleitungen zu große Verluste entstehen.

Vorteilhaft kann das vorgeschlagene Verfahren nicht nur in einem Radarsensorsystem, sondern auch in jeglichem Produkt mit mehreren HF-Bauelementen eingesetzt werden. Vorzugsweise wird das vorgeschlagene Radarsensorsystem im Automobilbereich eingesetzt.

Fig. 4 zeigt ein prinzipielles Ablaufdiagramm eines Verfahrens zum Betreiben eines Radarsensorsystems 100.

In einem Schritt 200 wird ein Senden und/oder Empfangen von Radarwellen mittels einer definierten Anzahl von HF-Bauelementen 10a...10n mittels jeweils mindestens einer Antenne durchgeführt.

In einem Schritt 210 wird ein Synchronisieren einer Betriebsfrequenz der HF-Bauelemente 10a...10n mittels eines Synchronisationsnetzwerks 20, das mit der definierten Anzahl von HF-Bauelementen 10a...10d verbunden ist durchgeführt, wobei ein definiertes HF-Bauelement 10a...10n als Master der Synchronisation fungiert.

Vorteilhaft kann das vorgeschlagene Verfahren als eine Software implementiert werden, welche in einem Steuergerät (nicht dargestellt) des Radarsensorsystems 100 abläuft. Vorteilhaft ist auf diese Weise eine einfache Änderbarkeit des Verfahrens unterstützt.

## Patentansprüche

1. Radarsensorsystem (100) aufweisend:
- eine definierte Anzahl von HF-Bauelementen (10a... 10n);
- wobei jedes der HF-Bauelemente (10a... 10n) jeweils wenigstens eine Antenne zum Senden und/oder Empfangen von Radarwellen und wenigstens eine Antennensteuerung zum Betreiben der wenigstens einen Antenne aufweist; und
- ein Synchronisationsnetzwerk (20), das mit allen HF-Bauelementen (10a... 10n) verbunden ist und über das eine Betriebsfrequenz aller HF-Bauelemente (10a... 10n) von wenigstens einem der HF-Bauelemente (10a... 10n) synchronisiert ist, wobei das Synchronisationsnetzwerk (20) kurze Leitungslängen in Relation zur Radarauflösung aufweist, wobei eine definierte Relation zwischen Längen von Zuleitungen des Synchronisationsnetzwerks (20) und einer, die Entfernungsauflösung des Radarsensorsystems repräsentierende Bin-Breite des Radarsensorsystems (100) verwendet wird, wobei die Länge der Zuleitungen derart ist, dass mit dem Radarsensorsystem (100) eine Änderung der Bin-Breite um ein Zehntel bereitgestellt wird.

2. Radarsensorsystem (100) nach Anspruch 1, **dadurch gekennzeichnet, dass** die HF-Bauelemente (10a... 10n) derart zueinander angeordnet sind, dass definierte Gruppen der HF-Bauelemente (10a... 10n) definiert eng voneinander beabstandet sind, wobei ein weiteres HF-Bauelement (10a... 10n) eine von den Zuleitungen der Gruppe der HF-Bauelemente (10a... 10n) derart unterschiedlich lange Zuleitung des Synchronisationsnetzwerks (20) aufweist, dass im Betrieb des Radarsensorsystems (100) ein Mischzeitpunkt des weiteren HF-Bauelements (10a... 10n) zu einem Mischzeitpunkt der Gruppen der HF-Bauelemente (10a... 10n) versetzt ist.

3. Radarsensorsystem (100) nach einem der vorhergehenden Ansprüche, **dadurch gekennzeichnet, dass** jedes HF-Bauelement (10a... 10n) als Master der Synchronisation fungieren kann.

4. Radarsensorsystem (100) nach einem der vorhergehenden Ansprüche, **dadurch gekennzeichnet, dass** die HF-Bauelemente (10a...10n) in bestimmungsgemäßer Anbringlage um ca. 45 Grad zueinander verdreht angeordnet sind.

5. Verfahren zum Betreiben eines Radarsensorsystems (100), aufweisend die Schritte:
- Senden und/oder Empfangen von Radarwellen mittels einer definierten Anzahl von HF-Bauelementen (10a...10n) mittels jeweils mindestens einer Antenne; und
- Synchronisieren einer Betriebsfrequenz der HF-Bauelemente (10a... 10n) mittels eines Synchronisationsnetzwerks (20), das mit der definierten Anzahl von HF-Bauelementen (10a... 10d) verbunden ist, wobei das Synchronisationsnetzwerk (20) kurze Leitungslängen in Relation zur Radarauflösung aufweist, wobei eine definierte Relation zwischen Längen von Zuleitungen des Synchronisationsnetzwerks (20) und einer, die Entfernungsauflösung des Radarsensorsystems repräsentierende Bin-Breite des Radarsensorsystems (100) verwendet wird, und wobei ein definiertes HF-Bauelement (10a... 10n) als Master der Synchronisation fungiert, wobei die Länge der Zuleitungen derart ist, dass mit dem Radarsensorsystem (100) eine Änderung der Bin-Breite um ein Zehntel bereitgestellt wird.

## Claims

1. Radar sensor system (100) comprising:
- a defined number of RF components (10a... 10n);
- wherein each of the RF components (10a... 10n) comprises in each case at least one antenna for transmitting and/or receiving radar waves and at least one antenna controller for operating the at least one antenna; and
- a synchronization network (20) that is connected to all the RF components (10a... 10n) and by way of which an operating frequency of all the RF components (10a... 10n) is synchronized by at least one of the RF components (10a... 10n), wherein the synchronization network (20) has short line lengths in relation to the radar resolution, wherein a defined relationship between lengths of supply lines of the synchronization network (20) and a bin width, which represents the range resolution of the radar sensor system, of the radar sensor system (100) is used, wherein the length of the supply lines is such that the radar sensor system (100) provides a change in the bin width by one tenth.

2. Radar sensor system (100) according to Claim 1, **characterized in that** the RF components (10a... 10n) are arranged with respect to one another in such a way that defined groups of the RF components (10a... 10n) are spaced apart slightly from one another in a defined manner, wherein a further RF component (10a... 10n) comprises a supply line of the synchronization network (20) that has a different length to that of the supply lines of the group of RF components (10a... 10n) in such a way that, during operation of the radar sensor system (100), a mixing time of the further RF component (10a... 10n) is offset relative to a mixing time of the groups of RF components (10a... 10n).

3. Radar sensor system (100) according to either of the preceding claims, **characterized in that** each RF component (10a... 10n) is able to operate as the synchronization master.

4. Radar sensor system (100) according to one of the preceding claims, **characterized in that** the RF components (10a... 10n) are arranged so as to be rotated by approximately 45 degrees with respect to one another in the intended installation position.

5. Method for operating a radar sensor system (100), comprising the steps of:
- transmitting and/or receiving radar waves by means of a defined number of RF components (10a... 10n) by means of in each case at least one antenna; and
- synchronizing an operating frequency of the RF components (10a... 10n) by means of a synchronization network (20) that is connected to the defined number of RF components (10a... 10d), wherein the synchronization network (20) has short line lengths in relation to the radar resolution, wherein a defined relationship between lengths of supply lines of the synchronization network (20) and a bin width, which represents the range resolution of the radar sensor system, of the radar sensor system (100) is used, and wherein a defined RF component (10a... 10n) operates as the synchronization master, wherein the length of the supply lines is such that the radar sensor system (100) provides a change in the bin width by one tenth.

## Revendications

1. Système de capteur radar (100), présentant :
- un nombre défini de composants HF (10a...10n) ;
- chacun des composants HF (10a...10n) présentant respectivement au moins une antenne pour émettre et/ou recevoir des ondes radar et au moins une commande d'antenne pour faire fonctionner ladite au moins une antenne ; et
- un réseau de synchronisation (20) qui est relié à tous les composants HF (10a...10n) et par lequel une fréquence de fonctionnement de tous les composants HF (10a...10n) est synchronisée par au moins l'un des composants HF (10a...10n), dans lequel le réseau de synchronisation (20) présente des longueurs de ligne courtes par rapport à la résolution du radar, dans lequel une relation définie entre les longueurs des lignes d'alimentation du réseau de synchronisation (20) et un intervalle de classe du système de capteur radar (100), représentant la résolution en distance du système de capteur radar, est utilisée, dans lequel la longueur des lignes d'alimentation est telle que le système de capteur radar (100) fournit un changement d'un dixième de l'intervalle de classe.

2. Système de capteur radar (100) selon la revendication 1, **caractérisé en ce que** les composants HF (10a...10n) sont disposés les uns par rapport aux autres de telle sorte que des groupes définis des composants HF (10a...10n) sont trouvent les uns par rapport aux autres à une distance serrée de manière définie, dans lequel un composant HF supplémentaire (10a...10n) présente une ligne d'alimentation du réseau de synchronisation (20) dont la longueur est tellement différente des lignes d'alimentation du groupe des composants HF (10a...10n) qu'en cours de fonctionnement du système de capteur radar (100), un moment de mélange du composant HF supplémentaire (10a...10n) est décalé vers un moment de mélange des groupes des composants HF (10a...10n).

3. Système de capteur radar (100) selon l'une quelconque des revendications précédentes, **caractérisé en ce que** chaque composant HF (10a...10n) peut servir de maître de la synchronisation.

4. Système de capteur radar (100) selon l'une quelconque des revendications précédentes, **caractérisé en ce que** les composants HF (10a...10n) sont disposés en étant tournés d'environ 45 degrés les uns par rapport aux autres dans une position de montage conforme.

5. Procédé permettant de faire fonctionner un système de capteur radar (100), présentant les étapes suivantes consistant à :
- émettre et/ou recevoir des ondes radar au moyen d'un nombre défini de composants HF (10a...10n), respectivement au moyen d'au moins une antenne ; et
- synchroniser une fréquence de fonctionnement des composants HF (10a...10n) au moyen d'un réseau de synchronisation (20) qui est relié au nombre défini de composants HF (10a...10d), dans lequel le réseau de synchronisation (20) présente des longueurs de ligne courtes par rapport à la résolution du radar, dans lequel une relation définie entre les longueurs des lignes d'alimentation du réseau de synchronisation (20) et un intervalle de classe du système de capteur radar (100), représentant la résolution en distance du système de capteur radar, est utilisée, et dans lequel un composant HF (10a...10n) défini sert de maître de la synchronisation, dans lequel la longueur des lignes d'alimentation est telle que le système de capteur radar (100) fournit un changement d'un dixième de l'intervalle de classe.
